Europäisches Patentamt

(19) European Patent Office

Office européen des brevets

(11) Veröffentlichungsnummer : **0 032 175**
**B1**

(12) **EUROPÄISCHE PATENTSCHRIFT**

(45) Veröffentlichungstag der Patentschrift :
21.03.84

(21) Anmeldenummer : 80107046.7

(22) Anmeldetag : 14.11.80

(51) Int. Cl.³ : **C 10 M  1/14, C 10 M  1/18,**
**C 10 M  1/28, C 10 M  1/32,**
**C 08 F 255/02, C 08 L 51/06**

(54) Scherstabile Schmieröladditive.

(30) Priorität : 12.01.80 DE 3001045

(43) Veröffentlichungstag der Anmeldung :
22.07.81 Patentblatt 81/29

(45) Bekanntmachung des Hinweises auf die Patenterteilung : 21.03.84 Patentblatt 84/12

(84) Benannte Vertragsstaaten :
DE FR GB NL

(56) Entgegenhaltungen :
EP-A- 0 008 327
EP-A- 0 014 746
FR-A- 2 162 174
FR-A- 2 339 669
US-A- 4 149 984

(73) Patentinhaber : Röhm GmbH
Kirschenallee Postfach 4242
D-6100 Darmstadt 1 (DE)

(72) Erfinder : Benda, Rainer, Dr. Dipl.-Phys.
Ringstrasse 124
D-6101 Rossdorf 1 (DE)
Erfinder : Knöll, Helmut
Brandauer Klinger 16
D-6147 Lautertal 1 (DE)
Erfinder : Neudörfl, Peter, Dr. Dipl.-Phys.
Kesselhutweg 16
D-6100 Darmstadt-Neu-Kranichstein (DE)
Erfinder : Pennewiss, Horst, Dr.
Meissnerweg 53
D-6100 Darmstadt-Neu-Kranichstein (DE)

## Scherstabile Schmieröladditive

Die Erfindung betrifft scherstabile Schmieröladditive auf der Basis einer Kombination von Polyalkylmethacrylaten (PAMA), Olefincopolymerisaten (OCP) und hydrierten Block-copolymerisaten, aufgebaut aus konjugierten Dienen und Styrol (HSD), insbesondere Isopren und Styrol.

Die Anforderungen der Technik an die Eigenschaften von Schmieröladditiven sind mit jedem erreichten Fortschritt stets höher gesteckt worden. Schmieröladditive sollen den Viskositätsindex der Schmieröle verbessern (VI-Verbesserer) und möglichst optimale Verdickungs-Dispergier- und Detergenzwirkung besitzen bei gleichzeitiger Verschleißschutzwirkung. Weitere kritische Punkte sind die Wirkung auf den Stockpunkt und insbesondere die Scherstabilität der Schmierölzusätze. Eine unerläßliche Bedingung ist dabei, daß die Mischungen mit den Mineralölen stabile Systeme darstellen. Andererseits erwartet die Technik berechtigterweise, daß Handelsprodukte mit einem hohen absoluten Polymerisatgehalt zur Verfügung gestellt werden.

Die verschiedenen Klassen von Polymeren, wie Polyalkylmethacrylate (PAMA) und Olefincopolymerisate (OCP), auf denen Schmieröladditive in der Regel aufgebaut sind, besitzen die genannten erwünschten Qualitäten in zum Teil unterschiedlichem Maße.

Es erscheint daher naheliegend, durch Kombination besonders geeigneter Vertreter eine Optimierung der Eigenschaften herbeizuführen. Der Kombinierbarkeit der verschiedenen Klassen von Polymeren sind jedoch wegen der dem Fachmann geläufigen Unverträglichkeit von Polymeren in Lösungen Grenzen gesetzt. Unvereinbarkeit der Polymeren in Lösung ist gerade in den für Mischungszwecke besonders interessanten Mischungsbereichen leider allzu oft der Fall. Zur Lösung dieses Problems wird im Falle der (Meth)acrylsäureester und der Olefincopolymerisate vorgeschlagen, daß ein Olefin-Homo- oder Copolymerisat in Schmieröl bis zum Erreichen einer bestimmten Viskosität gelöst wird, dann in Gegenwart des gelösten OCP die Methacrylsäureester-Monomeren polymerisiert werden und in dieser Lösung weiteres Polyolefin gelöst wird. (US-A 4 149 984)

In der deutschen Patentanmeldung DE-A 28 35 192.0 werden Schmieröladditive auf der Basis eines hydrierten Block-copolymerisats aus konjugierten Dienen und Styrol (HSD) vorgeschlagen, auf die zusätzlich Styrol und/oder ein Alkylester der Methacrylsäure, hydrophobierende Vinylester und/oder, polymerisationsfähige heterocyclische Monomere polymerisiert werden, wobei in erster Stufe Styrol und/oder die Alkylester der (Meth)acrylsäure in Gegenwart des HSD polymerisiert und in einer zweiten Stufe die weiteren Monomeren pfropfend aufpolymerisiert werden. Es bestand jedoch weiterhin die Aufgabe, die Eigenschaften von Schmieröladditiven zu verbessern, insbesondere im Hinblick auf deren Scherstabilität. Soweit dabei Polymerkombinationen in Betracht gezogen werden konnten, war mit der bekannten Unvereinbarkeit der Vertreter verschiedener Polymerklassen in ein- und demselben Lösungsmittel zu rechnen.

Es wurde nun gefunden, daß man scherstabilere Polymerkombinationen erhält, ohne hinsichtlich der anderen erwünschten Eigenschaften Abstriche machen zu müssen, wenn man als VI-Verbesserer bekannte Olefinhomo- bzw. Olefincopolymerisate in einem für die Verwendung als Schmiermittel geeignetes Medium, beispielsweise Mineralöl löst, auf das gelöste Olefincopolymerisat monomere Methacrylsäureester, gegebenenfalls zusammen mit weiteren Monomeren, die als Bausteine von VIverbesserern bekannt sind, pfropfend aufpolymerisiert und anschließend zu diesem die Lösung eines hydrierten Blockcopolymerisats, aufgebaut aus konjugierten Dienen und Styrol in einem geeigneten Lösungsmittel zumischt.

Die erfindungsgemäß verwendbaren Olefinhomo- und insbesondere Copolymerisate sind in bekannter weise, bevorzugt aus Äthylen, Propylen, Butylen oder/und Isobutylen aufgebaut. Neben den genannten Mono-Olefinen können dabei noch $\omega$-Phenyl-1-alkene mit 9 bis 10 C-atomen, Norbornen-(2), endständig ungesättigte, unkonjugierte Diolefine mit 5 bis 8 Kohlenstoffatomen, Dicyclopentadien, 5-Methylennorbornen- (2) mitpolymerisiert werden. Derartige Olefincopolymerisate sind beispielsweise aus den DE-AS 1 644 941, 1 963 039 und 1 042 164 sowie aus den US-A 2 327 705, 2 825 721, 2 921 058 und 2 571 345 bekannt. Besonders bevorzugt sind Olefincopolymerisate aus Äthylen/Propylen mit einem Propylengehalt von 25 bis 60 Gew.-%, vorzugsweise um die 30 Gew.-%. Ihre gewichtsmittleren Molekulargewichte liegen in der Regel im Bereich von 50 000 bis 200 000.

Bei den Methacrylsäureestern handelt es sich um die einschlägig verwendeten Ester mit einem Alkoholrest von 8-18 C-Atomen, vorzugsweise 10-18 C-Atomen ; insbesondere seien Decyl-, Lauryl-, Palmityl-, Cetyl- und Stearylester bzw. Gemische derselben erwähnt.

Zusätzlich können noch andere Monomere in geringeren Anteilen, beispielsweise niedere Acrylsäureester und Methacrylsäureester mit 1-4 C-Atomen im Alkoholrest, wie z. B. Acrylsäurebutylester sowie Styrol, $\alpha$-Methylstyrol copolymerisiert werden. Dabei liegt der Anteil der Monomeren, die keine Ester von $C_8$-$C_{18}$-Alkoholen sind, bei 0 bis ca. 40 %, bezogen auf die gesamte Acrylat/Methacrylatkomponente unter Einschluß aller übrigen Bestandteile. Die Gesamtheit der erfindungsgemäß in Gegenwart der Polyolefinkomponente polymerisierten Monomeren wird im folgenden (Meth)acrylat-Komponente genannt.

Weiter können erfindungsgemäß mit der Methacrylatkomponente copolymerisierbare Monomere mit polaren bzw. basischen Gruppen polymerisiert werden. Eine Aufstellung derartiger Monomerer kann beispielsweise der DE-A 26 34 033 entnommen werden. Die polaren bzw. basischen Gruppen in den Monomeren sind erfahrungsgemäß geeignet, dem Polymeren die erwünschte Dispergier-Detergenzwirkung zu verleihen. Dazu gehören beispielsweise Dialkylaminoalkyl(meth)acrylate, insbesondere das Diäthylaminoäthylmethacrylat. Weiter können vorteilhaft polymerisationsfähige, heterocyclische Monomere copolymerisiert werden. Besonders genannt seien Vinylpyridin, Vinylpyrrolidin, Vinylpyrrolidon oder/und Vinylimidazol und deren alkylsubstituierte Derivate.

Der Anteil der Monomeren mit polaren, insbesondere stickstoffhaltigen Gruppen, kann dabei zwischen 0 und 30 %, vorzugsweise 0 und 10 %, bezogen auf den Acrylat- bzw. Methacrylatanteil (inclusive der anderen nichtpolaren bzw. nichtbasischen Bestandteile) ausmachen. Die erfindungsgemäß zu verwendenden, hydrierten Blockpolymerisate, aufgebaut aus konjugierten Dienen und Styrol, sind beispielsweise aus der DE-A 21 56 122 bekannt. Vorzugsweise finden hydrierte Blockpolymerisate aus 2-Methyl-1,3-butadien (Isopren) und Styrol vorzugsweise im Verhältnis 55 : 45 Anwendung. Die hydrierten Blockcopolymerisate haben in der Regel ein mittleres Molekulargewicht von $1 \cdot 10^4$ bis $3 \cdot 10^5$, vorzugsweise $3 \cdot 10^4$ bis $1 \cdot 10^5$; sie sind im allgemeinen hydriert bis zu einem Restgehalt an olefinischen Doppelbindungen von < 15 %, im wesentlichen < 5 %.

Die Herstellung der Blockcopolymerisate kann beispielsweise durch anionische Polymerisation in aliphatischen bzw. cycloaliphatischen Lösungsmitteln unter Verwendung von Alkalimetallen oder organischen Verbindungen derselben erfolgen. Die Hydrierung kann ebenso in bekannter Weise vorgenommen werden, beispielsweise durch katalytische Hydrierung über Raney-Nickel, Platin oder Palladium auf Kohlenstoff usw. oder durch Reduktionsmittel auf der Basis von Organometallverbindungen, insbesondere Hydriden.

Im folgenden wird das hydrierte Blockpolymerisat aufgebaut aus konjugierten Dienen und Styrol, kurz als « hydriertes Blockpolymerisat » bezeichnet.

Das pfropfende Aufpolymerisieren der monomeren Methacrylsäureester und gegebenenfalls weiterer Monomerer der (Meth)acrylatkomponente geschieht erfindungsgemäß in einem für die spätere Verwendung als Schmiermittel geeigneten Medium, beispielsweise in einem Mineralöl, zweckmäßig mit einer Viskosität von 3-6 mPa.s bei 100 °C. Die Konzentration an Polyolefin in dem als Schmiermittel geeigneten Medium vor Beginn der (pfropfenden) Polymerisation der Methacrylatkomponente beträgt zweckmäßig 5-20 Gew.-%, vorzugsweise 10 bis 15 Gew.-%.

Die Polymerisation der Methacrylatkomponente kann technisch in weitgehender Anlehnung an bekannte Verfahren durchgeführt werden (vgl. z. B. Pavlinec et al. J. Polymer Sc. Part C. No. 16, S. 1113-1123 [1967]). Die Polymerisation kann z. B. radikalisch unter Verwendung geeigneter Polymerisationsinitiatoren, wie z. B. Perverbindungen, speziell Persäureester, durchgeführt werden. Die jeweils zweckmäßige Menge an Initiator liegt im Kenntnisbereich des Fachmanns. Erfindungsgemäß wird dann zu der nach dem Polymerisationsschritt erhaltenen Lösung die Lösung des hydrierten Blockcopolymerisats in einem geeigneten Lösungsmittel zugegeben. Ein geeignetes Lösungsmittel soll die Bedingung erfüllen, daß es sowohl den Styrolblock als auch den Dien-Block im hydrierten Blockpolymerisat zu lösen imstande ist.

Diese Bedingung wird in der Regel, z. B. von aromatischen bzw. aromatische Reste enthaltenden Lösungsmitteln erfüllt. Beispielhaft erwähnt seien die aromatischen Verbindungen ohne funktionelle Gruppen, wie Toluol, Xylol und Mineralöle mit 10-40 % Aromatenanteil, weiter Lösungsmittel mit Esterfunktionen und aromatischen Resten, wie die Ester der Phthalsäure, insbesondere Dibutylphthalat sowie Gemische derselben, z. B. mit Mineralöl etwa des ohnehin verwendeten Typs.

Die Konzentration des hydrierten Blockpolymerisats im Lösungsmittel ist vorteilhafterweise bei 10 bis 40 Gew.-%, bevorzugt bei 15 bis 30 Gew.-%. Bei dem erfindungsgemäßen Verfahren stehen die Komponenten vorzugsweise im folgenden Verhältnis : Olefinhomo- oder Copolymerisat 5 bis 25 Gew.-Teile, (Meth)acrylat-Komponente 40 bis 70 Gew.-Teile, hydrierte Blockcopolymerisate 5 bis 55 Gew.-Teile. Besonders bevorzugt ist das Verhältnis Olefinhomo- oder Copolymerisat 10 bis 20 Gew.-Teile, (Meth)acrylat-Komponente 50 bis 70 Gew.-Teile, hydrierte Blockcopolymerisate 10 bis 40 Gew.-Teile.

Zur Durchführung des erfindungsgemäßen Verfahren kann beispielsweise zunächst in einer der üblichen, zur Polymerisation geeigneten Apparaturen das Olefinhomo-bzw. Copolymerisat vorzugsweise in dem für die Verwendung als Schmiermittel geeigneten Medium zusammen mit mindestens einem Polymerisationsinitiator vorgegeben werden. Nach dem Lösen können zweckmäßigerweise unter Erwärmen im allgemeinen oberhalb 80 °C, beispielsweise auf 90 bis 100 °C die zu polymerisierenden Monomeren der (Meth)acrylat-komponente plus Initiator über einen gewissen Zeitraum, der von der Größe des Ansatzes beeinflußt sein wird, beispielsweise über 3-4 Stunden unter Rühren gleichmäßig zudosiert werden. Einige Zeit nach Beendigung des Zudosierens, etwa zwei Stunden später, kann noch eine gewisse Initiatormenge nachgefüttert werden. Die vorgegebene Menge an Initiator, die mit den Monomeren zudosiert und die nachgefütterte Menge können im ungefähren Verhältnis 2 : 3 : 1 stehen.

Als Anhaltspunkt für die einzusetzende Initiatormenge kann man mit Mengen von 0,1 bis 3,0 Gew.-%, bezogen auf die zu polymerisierenden Monomeren rechnen, wobei dem Typ des Initiators und den übrigen Parametern des Ansatzes Rechnung zu tragen sein wird.

Anschließend an die Polymerisation kann dann die Zugabe der hydrierten Blockcopolymerisate in einem geeigneten Lösungsmittel bzw. Lösungsmittelgemisch des oben beschriebenen Typs erfolgen.

In einem typischen Ansatz werden z. B. zunächst ca. 85 Gew.-Teile an der monomeren Methacrylat-Komponente auf 15 Gew.-Teile Olefin-copolymerisat gepfropft, die als ca. 54 %-ige Lösung in Mineralöl

(Viskosität $\eta$ bei 100 °C = 5,3 mm²/s) vorgelegt worden waren. Zu der dabei entstehenden Lösung wird schließlich im ungefähren Volumverhältnis 1 : 1 die ca. 15 %-ige Lösung des hydrierten Blockcopolymerisats, beispielsweise in Dibutylphthalat in Mineralöl zugemischt.

Das Endprodukt hat dann einen Polymergehalt von ca. 37 Gew.-% und enthält ca. 26 Gew.-Teile Methacrylat-Komponente, 4,55 Gew.-Teile Olefincopolymerisat und 6,55 Gew.-Teile hydriertes Blockcopolymerisat auf 100 Gew.-Teile Lösung.

Überraschenderweise sind die erfindungsgemäß erhaltenen Lösungen nach allen vorliegenden Ergebnissen über mindestens den von der Technik geforderten Zeitraum stabil.

Die erfindungsgemäß erhaltenen Polymerkombinationen zeichnen sich bei ihrer Anwendung u. a. durch ihre besonders gute Scherstabilität aus.

Die folgenden Beispiele dienen zur Erläuterung der Erfindung :

### Beispiel 1

In einem 1,5 l 4-Halsrundkolben mit Rührer, Thermometer, Rückflußkühler und Dosierleitung wird folgende Mischung vorgelegt

594 g Mineralöl ($\eta_{100\,°C}$ = 5,3 mm²/s)
67 g Äthylen-Propylen-Copolymerisat mit 72 % Äthylen ($\bar{M}_w \approx$ 100 000 ; U = 0,8 ; SSI (*) (1 %ig Mineralöl) = 22)
73 g Methacrylsäureester eines $C_{12}$-$C_{18}$-Alkoholgemisches
0,8 g tert. Butylperoctoat.

Nach dem Lösen der Komponenten wird bei 98 °C nachstehendes Gemisch über einen Zeitraum von 3,5 Stunden gleichmäßig zudosiert :

254 g Methacrylsäureester eines $C_{12}$-$C_{18}$-Alkoholgemisches
1,5 g tert.-Butylperoctoat.

Zwei Stunden nach Zulaufende wird mit 0,7 g tert. Butylperoctoat nachgefüttert. Gesamtpolymerisationszeit 8 h. Anschließend wird folgendes Gemisch zugegeben :

12,2 g Vinylpyrrolidon
1,0 g tert.-Butylperbenzoat.

Die Pfropfung erfolgt dann bei 130 °C, wobei jeweils nach 1 und 2 Stunden weitere 0,5 g tert.-Butylperbenzoat nachgefüttert werden. Gesamtdauer der Pfropfung 6 h.

Polymerisatgehalt des Endproduktes : 40,6 Gew.% Viskosität (100 °C ; 40,6 Gew.%ig) = 1 120 mm²/s Viskosität (100 °C ; 10 Gew.%ig) (**) = 15,3 mm²/s
SSI (*) (10 %ig in Mineralöl mit $\eta_{100\,°C}$ = 5,3 mm²/s) = 27
Gewichts-Verhältnis Äthylen-Propylen-Copolymerisat zu Polyalkylmethacrylat einschließlich Polyvinylpyrrolidon = 17/83.

100 g des so erhaltenen, verhältnismäßig scherinstabilen VI-Verbesserers werden
a) mit 38 g
b) mit 78 g
c) mit 125 g
einer 20 %igen Lösung eines hydrierten Isopren-Styrol-Blockcopolymerisates [ 46 % Styrol, SSI (*) (1 %ig in Mineralöl mit $\eta_{100\,°C}$ = 5,3 mm²/s) = 5 ] in Dibutylphalat vermischt.

Es werden folgende Endprodukte erhalten :
a) Polymerisatgehalt : 35,1 Gew.% Viskosität (100 °C ; 9,7 Gew.%ig) (**) = 15,3 mm²/s
SSI (*) (9,7 %ig in Mineralöl mit $\eta_{100\,°C}$ = 5,3 mm²/s) = 25
(o) Gewichts-Verhältnis Äthylen-Propylen-Copolymerisat zu hydrierten Isopren-Styrol-Blockcopol. zu Polyalkyl-methacrylat einschließlich Polyvinylpyrrolidon = 14,3/15,7/70
b) Polymerisatgehalt : 31,5 Gew.% Viskosität (100 °C ; 9,7 Gew.%ig) (**) = 15,3 mm²/s
SSI (*) (9,7 %ig in Mineralöl mit $\eta_{100\,°C}$ = 5,3 mm²/s) = 20
(o) 12,2/27,8/60
c) Polymerisatgehalt : 29 % Viskosität (100 °C ; 5,0 Gew.%ig) (**) = 12,69 mm²/s
SSI (*) (5 %ig in Mineralöl mit $\eta_{100\,°C}$ = 5,3 mm²/s) = 10
(o) 10,5/38,1/51,4

### Beispiel 2

In einem 3 l 4-Halsrundkolben mit Rührer, Thermometer, Rückflußkühler und Dosierleitung wird folgende Mischung vorgelegt :

(*) SSI = Scherstabilitätsindex = Verlust an Verdickungswirkung in % bei Scherstab. prüfung nach DIN 51 382
(**) bezogen auf Konzentration des Endproduktes

810 g Mineralöl ($\eta_{100\,°C}$ = 5,3 mm²/s)

90 g Äthylen-Propylen-Copolymerisat mit 70 % Äthylen ($\bar{M}_w$ ≈ 100 000 ; U = 0,8 ; SSI (*) (1 %ig in Mineralöl) = 26)

100 g Methacrylsäureester eines $C_{12}$-$C_{18}$-Alkoholgemisches

4,7 g tert. Butylperoctoat

2,4 g Dodecylmercaptan

Nach dem Lösen der Komponenten wird bei 90 °C nachstehendes Gemisch über einen Zeitraum von 3,5 Stunden gleichmäßig zudosiert :

1 010 g Methacrylsäureester eines $C_{12}$-$C_{18}$-Alkoholgemisches

7,6 g tert. Butylperoctoat.

Zwei Stunden nach Zulaufende wird mit 2,2 g tert. Butylperoctoat nachgefüttert. Gesamtpolymerisationszeit 8 h. Anschließend Zusatz von :

304,5 g Äthylen-Propylen-Copolymerisat mit 70 % Äthylen ($\bar{M}_w$ ≈ 100 000 ; U = 0,8 ; SSI (*) (1 %ig in Mineralöl) = 26)

544,5 g Mineralöl ($\eta_{100\,°C}$ = 5,3 mm²/s)

Nach dem Lösen des Äthylen-Propylen-Copolymerisats bei 100 °C innerhalb 8 Stunden wird folgendes Gemisch zugegeben :

51,3 g Mineralöl ($\eta_{100\,°C}$ = 5,3 mm²/s)

38,9 g Vinylpyrrolidon

12,4 g Vinylimidazol

3,9 g tert. Butylperbenzoat

Die Pfropfung erfolgt bei 130 °C, wobei jeweils nach 1 und 2 Stunden weitere 1,9 g tert. Butylperbenzoat nachgefüttert werden.

Gesamtdauer der Pfropfung 6 h.

Polymerisatgehalt des Endproduktes = 50,0 %

Viskosität (100 °C ; 50,0 Gew.%ig) = 6 160 mm²/s

Viskosität (100 °C ; 5 Gew.%ig) (**) = 12,2 mm²/s

SSI (*) (5%ig in Mineralöl mit $\eta_{100\,°C}$ = 5,3 mm²/s) = 24,6

Gewichtsverhältnis Äthylen-Propylen-Copolymerisat zu Polyalkylmethacrylat einschließlich Polyvinylpyrrolidon und Polyvinylimidazol = 35/65.

70 g des so erhaltenen, verhältnismäßig scherinstabilen VI-Verbesserers werden mit 103 g einer 20 %igen Lösung eines hydrierten Isopren-Styrol-Blockcopolymerisates [ 46 % Styrol, SSI (*) (1 %ig in Mineralöl mit $\eta_{100\,°C}$ = 5,3 mm²/s) = 5 ] in Dibutylphalat vermischt.

Dabei wird folgendes Endprodukt erhalten : Polymerisatgehalt = 31,7 %

Viskosität (100 °C ; 4,7 Gew.%ig) (**) = 13,7 mm²/s

SSI (*) (4,7 %ig in Mineralöl mit $\eta_{100\,°C}$ = 5,3 mm²/s) = 12,5

Gewichtsverhältnis Äthylen-Propylen-Copolymerisat zu hydrierten Isopren-Styrol-Blockcopol. zu Polyalkylmethacrylat einschließlich Polyvinylpyrrolidon und Polyvinylimidazol = 22,5/37,5/40.

**Ansprüche**

1. Scherstabile Schmieröladditive in Form von zur unmittelbaren Anwendung geeigneten Lösungen mit hohem Polymerisatgehalt, enthaltend Olefinhomo- und/oder Copolymerisate, auf die Methacrylsäureester pfropfend aufpolymerisiert wurden, dadurch erhalten, daß man

a) die Olefinhomo- und/oder -copolymerisate in einem für die Verwendung als Schmiermittel geeigneten Medium in Mengen von 5-20 Gew.-% löst,

b) auf das gelöste Olefinhomo- und/oder -copolymerisat monomere Methacrylsäureester pfropfend aufpolymerisiert und

c) dazu die Lösung eines hydrierten Blockcopolymerisats aus Isopren und Styrol zumischt, wobei ein Verhältnis Olefinhomo- oder Copolymerisat zu Methacrylsäureester zu hydriertem Blockcopolymerisat aus Isopren und Styrol von 5 bis 25 Gew.-Teilen zu 40 bis 70 Gew.-Teilen zu 5-55 Gew.-Teilen eingehalten wird.

(*) SSI = Scherstabilitätsindex = Verlust an Verdickungswirkung in % bei Scherstab. prüfung nach DIN 51 382

(**) bezogen auf Konzentration des Endproduktes.

2. Scherstabile Schmieröladditive gemäß Anspruch 1, dadurch gekennzeichnet, daß die Olefincopolymerisate aus Äthylen, Propylen, Butylen und/oder Isobutylen aufgebaut sind.

3. Scherstabile Schmieröladditive gemäß Anspruch 1, dadurch gekennzeichnet, daß auf das gelöste Olefinhomo- und/oder -copolymerisat Methacrylsäureester mit einem Alkoholrest von 8-18 C-Atomen und gegebenenfalls in geringeren Anteilen niedere Acryl und/oder Methacrylsäureester, und/oder polare Gruppen enthaltende Monomere und/oder Styrol oder polymerisationsfähige Styrolderivate pfropfend aufpolymerisiert werden.

4. Scherstabile Schmieröladditive gemäß den Ansprüchen 1 bis 4, dadurch gekennzeichnet, daß das Gewichtsverhältnis des gelösten Olefinhomo- und/oder -copolymerisats zu der Gesamtheit der in Stufe b aufzupfropfenden Monomeren 5-40 zu 95-60, vorzugsweise 5-20 zu 95-80 beträgt.

5. Scherstabile Schmieröladditive gemäß Anspruch 4, dadurch gekennzeichnet, daß der Anteil der Methacrylsäureester mit einem Alkoholrest von 8-18 C-Atomen an der Gesamtheit der in Stufe (b) aufzupfropfenden Monomeren 60 bis 100 Gew.-%, vorzugsweise 90 bis 100 Gew.-% beträgt.

6. Scherstabile Schmieröladditive gemäß den Ansprüchen 5 bis 6, dadurch gekennzeichnet, daß in Stufe (b) in geringeren Anteilen Vinylpyridin und/oder Vinylpyrrolidin, und/oder Vinylpyrrolidon und/oder Vinylimidazol pfropfend aufpolymerisiert werden.

7. Scherstabile Schmieröladditive gemäß Anspruch 1, dadurch gekennzeichnet, daß die in Stufe (c) zugemischten hydrierten Blockcopolymerisate aus 2-Methyl-1,3-butadien und Styrol aufgebaut sind.

8. Scherstabile Schmieröladditive gemäß Anspruch 8, dadurch gekennzeichnet, daß die hydrierten Blockcopolymerisate in einem aromatischen oder aromatische Reste enthaltenden Lösungsmittel das gegebenenfalls noch Mineralöl, das für Schmieröladditive geeignet ist, enthalten kann, gelöst ist.

## Claims

1. Shear-resistant additives for lubricating oils in the form of solutions with a high polymer content which are suitable for direct use and which contain olefin homopolymers and/or copolymers onto which methacrylic acid esters have been polymerised by graft polymerisation, these additives being obtained by

a) dissolving the olefin homopolymers and/or copolymers in a medium suitable for use as a lubricant, in quantities of from 5 to 20 % by weight,

b) polymerising monomeric methacrylic acid esters onto the dissolved olefin homopolymer and/or copolymer by graft polymerisation and

c) adding a solution of a hydrogenated block copolymer of isoprene and styrene thereto, whilst maintaining a ratio of olefin homopolymer or copolymer to methacrylic acid ester to hydrogenated isoprene/styrene block copolymer of 5 to 25 parts by weight to 40 to 70 parts by weight to 5 to 55 parts by weight.

2. Shear-resistant additives for lubricating oils as claimed in claim 1, characterised in that the olefin copolymers are synthesised from ethylene, propylene, butylene and/or isobutylene.

3. Shear-resistant additives for lubricating oils as claimed in claim 1, characterised in that methacrylic acid esters with an alcohol group containing from 8 to 18 carbon atoms and optionally, in smaller amounts, lower acrylic and/or methacrylic acid esters, and/or monomers containing polar groups and/or styrene or polymerisable styrene derivatives are polymerised onto the dissolved olefin homopolymer and/or copolymer by graft polymerisation.

4. Shear-resistant additives for lubricating oils as claimed in claims 1 to 4, characterised in that the weight ratio of the dissolved olefin homopolymer and/or copolymer to the total quantity of monomers which are grafted on in step (b) is 5-40 to 95-60, preferably 5-20 to 95-80.

5. Shear-resistant additives for lubricating oils as claimed in claim 4, characterised in that the proportion of methacrylic acid esters with an alcohol group containing from 8 to 18 carbon atoms in the total quantity of monomers which are to be grafted on in step (b) is from 60 to 100 % by weight, preferably 90 to 100 % by weight.

6. Shear-resistant additives for lubricating oils as claimed in claims 5 and 6, characterised in that in step (b) minor amounts of vinyl pyridine and/or vinyl pyrrolidine and vinyl pyrrolidone and/or vinyl imidazole are polymerised on by graft polymerisation.

7. Shear-resistant additives for lubricating oils as claimed in claim 1, characterised in that the hydrogenated block copolymers added in step (c) are synthesised from 2-methyl-1,3-butadiene and styrene.

8. Shear-resistant additives for lubricating oils as claimed in claim 8, characterised in that the hydrogenated block copolymers are dissolved in an aromatic solvent or a solvent containing aromatic groups, which may optionally also contain mineral oil suitable for additives for lubricating oil.

## Revendications

1. Additifs stables au cisaillement pour huiles de graissage, sous forme de solutions convenant pour l'emploi direct, ayant une teneur élevée en polymères et contenant des homo- et/ou copolymères d'oléfines sur lesquels des méthacrylates ont été fixés par polymérisation par greffage, caractérisés en ce qu'ils sont obtenus par le fait que

a) l'on dissout les homo- et/ou copolymères d'oléfines, dans des proportions de 5 à 20 % en poids, dans un milieu susceptible d'être utilisé comme lubrifiant,

b) l'on fixe par polymérisation par greffage des méthacrylates monomères sur l'homo- et/ou le copolymère d'oléfine dissous et

c) l'on y ajoute la solution d'un copolymère séquencé hydrogéné d'isoprène et de styrène, en maintenant un rapport de l'homo- ou copolymère d'oléfine au méthacrylate et au copolymère séquencé hydrogéné d'isoprène et de styrène de 5-25 : 40-70 ; 5-55 parties en poids.

2. Additifs stables au cisaillement pour huiles de graissage selon la revendication 1, caractérisés en ce que les copolymères d'oléfines sont composés d'éthylène, de propylène, de butylène et/ou d'isobutylène.

3. Additifs stables au cisaillement pour huiles de graissage selon la revendication 1, caractérisés en ce qu'on fixe par polymérisation par greffage, sur l'homo- et/ou copolymère d'oléfines dissous, des méthacrylates dont le radical alcool contient 8 à 18 atomes de carbone et qui contiennent éventuellement, en plus faibles proportions, des acrylates et/ou méthacrylates inférieurs et/ou des monomères contenant des groupes polaires et/ou du styrène ou des dérivés polymérisables du styrène.

4. Additifs stables au cisaillement pour huiles de graissage selon l'une quelconque des revendications 1 à 3, caractérisés en ce que le rapport pondéral de l'homo- et/ou du copolymère d'oléfines dissous à l'ensemble des monomères qui doivent être fixés par polymérisation par greffage dans la phase (b) est de l'ordre de 5-40 : 95-60, de préférence de 5-20 : 95-80.

5. Additifs stables au cisaillement pour huiles de graissage selon la revendication 3, caractérisés en ce que la proportion des méthacrylates dont le radical alcool contient 8 à 18 atomes de carbone par rapport à la totalité des monomères qui doivent être fixés par polymérisation par greffage dans la phase (b) est de l'ordre de 60 à 100 % en poids, de préférence de 90 à 100 % en poids.

6. Additifs stables au cisaillement pour huiles de graissage selon la revendication 4 ou 5, caractérisés en ce que dans la phase (b), de la vinylpyridine et/ou de la vinylpyrrolidine et/ou de la vinylpyrrolidone et/ou du vinylimidazole sont fixés par polymérisation par greffage en plus faibles proportions.

7. Additifs stables au cisaillement pour huiles de graissage selon la revendication 1, caractérisés en ce que les copolymères séquencés hydrogénés qui sont mélangés dans la phase (c) sont composés de 2-méthyl-1,3-butadiène et de styrène.

8. Additifs stables au cisaillement pour huiles de graissage selon la revendication 7, caractérisés en ce que les copolymères séquencés hydrogénés sont dissous dans un solvant aromatique ou contenant des radicaux aromatiques, solvant qui peut encore contenir, le cas échéant, une huile minérale qui convient pour des additifs d'huiles de graissage.